# EUROPÄISCHE PATENTANMELDUNG

(11) **EP 1 772 499 A2**
(43) Veröffentlichungstag der Anmeldung: **11.04.2007**
(21) Anmeldenummer: 06020208.2
(22) Anmeldetag: 27.09.2006
(51) Int. Cl.: C09D 175/06, C09D 175/08, C08G 18/10, C08G 18/12

(54) **Reaktivsysteme, deren Herstellung und deren Verwendung**

(30) Priorität: 10.10.2005 DE 10548823
(71) Anmelder: Bayer MaterialScience AG, 51368 Leverkusen (DE)
(72) Erfinder: Gürtler, Christoph, Dr., 50676 Köln (DE); Feller, Thomas, 42659 Solingen (DE); Stingl, Thomas, Dr., 56410 Montabaur (DE)

(57) **Zusammenfassung**

Die vorliegende Erfindung betrifft neue blockierte abspalterfreie Polyurethan (PUR)-Prepolymere, ein Verfahren zu ihrer Herstellung und deren Verwendung als Ausgangskomponente bei der Herstellung von Polyurethankunststoffen und Oberflächenbeschichtungen.

## Beschreibung

Die vorliegende Erfindung betrifft neue blockierte abspalterfreie Polyurethan (PUR)-Prepolymere, ein Verfahren zu ihrer Herstellung und deren Verwendung als Ausgangskomponente bei der Herstellung von Polyurethankunststoffen und Oberflächenbeschichtungen.

Polyurethan (PUR)-Prepolyinere stellen wertvolle Bausteine für die Vernetzung mit Polyolen oder Aminen für verschiedene Anwendungsgebiete dar. Mit diesen Prepolymeren lassen sich hochwertige Polyurethan bzw. Polyharnstoffbeschichtungen herstellen. Für 1K PUR sind blockierte Prepolymere von besonderem Interesse.

Blockierungsmittel für NCO-Gruppen können beispielsweise Alkohole, Lactame, Oxime, Malonester, Alkylacetoacetate, Triazole, Phenole, Imidazole, Pyrazole sowie Amine, wie Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1-Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin sein.

Diese dem Fachmann bekannten Blockierungsmittel sind reversible Blockierungsmittel, das bedeutet, dass die entstandenen reversibel blockierten Polyurethan-Prepolymere den Nachteil aufweisen, dass nach der Umsetzung mit einem Härtungsmittel wie z.B. einem Polyamin das Blockierungsmittel wieder freigesetzt wird.

Das Blockierungsmittel kann so mit der Zeit entweichen bzw. ausgewaschen werden, was u. a. für die mechanischen Eigenschaften des Kunststoffs von großem Nachteil ist.

Dieser Nachteil kann durch die Verwendung von abspalterfreien Prepolymeren, bei denen das Blockierungsmittel bei der Aushärtung nicht freigesetzt wird, umgangen werden. Beispiele hierfür sind mit CPME (Cyclopentanon-2-carboxymethylester) und CPEE (Cyclopentanon-2-carboxyethylester) blockierte Systeme. Beispiele solcher Systeme sind in den deutschen Offenlegungsschriften DE 10260299 A1, DE 10132016 A1, DE 10226926 A1 und DE 10260300 A1 beschrieben worden.

Die bekannten Systeme, insbesondere solche auf HDI-Basis, weisen jedoch durch intermolekulare Wasserstoffbrückenbildung der Urethangruppen eine verhältnismäßig hohe Viskosität auf, was für die Verarbeitung entsprechender Reaktivsysteme von großem Nachteil ist.

Eine Möglichkeit, dies zu verbessern, ist die Verwendung von Lösemitteln zur Viskositätserniedrigung, was aber ökologisch und ökonomisch nicht erwünscht ist.

Aufgabe der vorliegenden Erfindung war daher die Bereitstellung von neuen, lichtechten, abspalterfreien Prepolymeren auf HDI-Basis, die eine deutlich niedrigere Viskosität als die bisher bekannten Prepolymere aufweisen und deswegen für lösemittelfreie oder -arme Systeme geeignet sind.

Dies wurde nun durch ein spezielles Herstellungsverfahren für solche Prepolymere, insbesondere mit CPEE- oder CPME-Blockierung gelöst.

Überraschenderweise wurde gefunden, dass Prepolymere, die vor der Blockierung mit den Blockierungsmitteln CPME oder CPEE, zur Restmonomerenabtrennung durch kontinuierliche Destillation aufgearbeitet wurden, über eine vergleichsweise niedrige Viskosität verfügen.

Gegenstand der Erfindung ist ein Verfahren zur Herstellung von blockierten Polyurethan-Prepolymeren, bei dem
I)
   A) lineare aliphatische Isocyanate mit
   B) einem oder mehreren Polyol(en)
      gegebenenfalls in Anwesenheit eines oder mehrerer Katalysatoren zu NCO-funktionellen Prepolymeren umgesetzt werden
      und
II) diese Prepolymere anschließend einer kontinuierliche Destillation unterworfen werden, bei der der Restmonomergehalt auf weniger als 10 Gew.-% der Gesamtmenge des lösemittelfreien Prepolymers abgesenkt wird, bevorzugt auf weniger als 5, besonders bevorzugt auf weniger als 1 Gew.%
   und
III) anschließend die freien NCO-Gruppen der nach Schritt II) erhaltenen Prepolymere gegebenenfalls in Anwesenheit eines oder mehrerer Katalysatoren mit einem Blockierungsmittel enthaltend mindestens ein CH-azides cyclisches Keton der allgemeinen Formel (1), 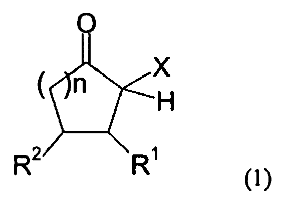 in welcher
   - X: eine mesomer oder induktiv elektronenziehende Gruppe ist,
   - R¹, R²: unabhängig voneinander ein Wasserstöffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sein können und
   - n: eine ganze Zahl von 0 bis 5 ist,
umgesetzt werden.

In Komponente A können lineare, aliphatische Isocyanate mit einer Funktionalität von bevorzugt ≥2, und einer bevorzugten Kettenlänge von C4 bis C10, besonders bevorzugt enthält A) Hexandiisocyanat (Hexamethylendiisocyanat, HDI), ganz besonders bevorzugt wird in A) nur HDI eingesetzt.

In Komponente B) des erfmdungsgemäßen Verfahrens, können die dem Fachmann aus der Polyurethanchemie an sich bekannten, höhermolekularen Polyetherpolyole, Polyesterpolyole, Polyacrylatpolyole und Polycarbonatpolyole eingesetzt werden.

Bei der Verwendung von Polyetherpolyolen in Komponente B) werden Polyetherpolyole eines zahlenmittleren Molekulargewichts von bevorzugt 300 bis 20000 g/mol, besonders bevorzugt 1000 bis 12000 g/mol, ganz besonders bevorzugt 2000 bis 6000 g/mol, eingesetzt, die in an sich bekannter Weise durch Alkoxylierung von geeigneten Starter-Molekülen zugänglich sind.

Geeignete Starter-Moleküle sind beispielsweise einfache Polyole wie Ethylenglykol, 1,2- bzw. 1,3-Propylenglykol und 1,4-Butandiol, 1,6-Hexandiol, Neopentylglykol, 2-Ethyl-1,3-hexandiol, Glyzerin, Trimethylolpropan, Pentaerythrit, Sorbit sowie niedermolekulare, Hydroxylgruppen aufweisende Ester derartiger Polyole mit aliphatischen oder aromatischen Dicarbonsäuren, sowie niedermolekulare Ethoxylierungs- oder Propoxylierungsprodukte derartiger einfacher Polyole oder beliebige Gemische derartiger modifizierter oder nicht modifizierter Alkohole, Wasser, organische Polyamine mit mindestens zwei N-H-Bindungen oder beliebige Gemische derartiger Starter-Moleküle.

Für die Alkoxylierung geeignet sind cyclische Ether wie Tetrahydrofuran und/oder Alkylenoxide wie Ethylenoxid, Propylenoxid, Butylenoxid, Styroloxid oder Epichlorhydrin, die in beliebiger Reihenfolge oder auch im Gemisch bei der Alkoxylierung eingesetzt werden können. Bevorzugt für die Alkoxylierung sind Ethylenoxid, Propylenoxid und Tetrahydrofuran (THF).

Bevorzugt sind Polyetherpolyole der vorstehend genannten Art basierend auf difunktionellen Startermolekülen, wobei die Polyetherpolyole einen Gehalt an ungesättigten Endgruppen von kleiner oder gleich 0,02 Milliäquivalente pro Gramm Polyol, besonders bevorzugt kleiner oder gleich 0,015 Milliäquivalente pro Gramm Polyol, ganz besonders bevorzugt kleiner oder gleich 0,01 Milliäquivalente pro Gramm Polyol aufweisen (Bestimmungsmethode ASTM D2849-69). Diese Polyetherpolyole haben eine besonders enge Molekulargewichtsverteilung, d.h. eine Polydispersität (PD = M_{w}/Mₙ) von bevorzugt 1,1 bis 1,5 und eine OH-Funktionalität von bevorzugt ≥ 1,90, besonders bevorzugt ≥ 1,95 auf.

Solche Polyetherdiole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Dies ist z. B. in US-A 5158 922 (z. B. Beispiel 30) und EP-A 0 654 302 (S. 5, Z. 26 bis S. 6, Z. 32) beschrieben.

Neben den vorstehend genannten Polyetherdiolen können selbstverständlich auch höherfunktionelle Polyetherpolyole mit höherer OH-Funktionalität eingesetzt werden.

Gut geeignet für das erfindungsgemäße Verfahren sind so genannte C4 Polyether, wie beispielsweise Verbindungen des Poly THF (BASF AG, DE). Diese zeichnen sich durch eine Polyalkylenoxideinheit mit 4 Kohlenstoffatomen aus.

Ebenfalls geeignet als Verbindungen der Komponente B sind Polyesterpolyole. So können z.B. mit Polyesterpolyolen, die durch Esterbildung mit einem Diol (z.B. Hexandiol, Cyclohexandimethanol, 3-Methylpentandiol, 1,3-Butandiol, 1,4-Butandiol) oder höherwertige Alkohole (z.B. Trimethylpropan oder Pentaerythrit) und ε-Caprolaton erhalten werden, niedrigviskose blockierte Prepolymere erhalten werden. Dabei kann die Länge des Polyesterpolyols durch die Zahl der verwendeten ε-Caprolaton-Einheiten bestimmt werden. Die Esterbildung kann durch gegebenenfalls durch Metallkatalysatoren wie z.B. Sn-II-ethylhexanoat beschleunigt werden.

Das bevorzugte Molekulargewicht der Polyesterpolyole (Zahlenmittel) beträgt ≤1000 g/mol. Die bevorzugte Funktionalität der Polyesterpolyole beträgt 2 bis 3.

Auch Polyacrylatpolyole sind für die Herstellung der blockierten Prepolymere geeignet (Komponente B). Die Polyacrylatpolyole haben ein zahlenmittleres Molekulargewicht von 200 bis 10000 g/mol, besonders bevorzugt 200 bis 6000 g/mol und ganz besonders bevorzugt von 200 bis 2500 g/mol. Die Funktionalität der eingesetzten Polyacrylatpolyole beträgt bevorzugt 1,6 bis 3,8, besonders bevorzugt 1,8 bis 3,5. Die OH Zahl dieser Polyacrylatpolyole beträgt bevorzugt 15 bis 150, besonders bevorzugt 20 bis 100 und ganz besonders bevorzugt 40 bis 80. Geeignet sind z.B. Acryflow^{®} P60 und P90 verwendet werden (Handelsprodukte der Fa. Lyondell, US).

Auch Polycarbonatpolyole kommen zum Aufbau der erfindungsgemäßen Prepolymere in Betracht (Komponente B). Diese weisen aliphatische Polycarbonatpolyolbausteine auf, die sich durch besonders gute mechanische Stabilität und Chemikalienbeständigkeit auszeichnen. Die Funktionalität der eingesetzten Polycarbonatpolyole beträgt bevorzugt 1,6 bis 3,8, besonders bevorzugt 1,8 bis 3,5. Diese Polycarbonatpolyole haben ein zahlenmittleres Molgewicht von bevorzugt 100 bis 6000 g/mol und besonders bevorzugt von 100 bis 4000 g/mol. Die OH-Zahl ist von der Funktionalität der Polycarbonatpolyole abhängig und beträgt typischerweise 20 bis 900. Geeignet sind z.B. Desmophen® C2200 (lineares aliphatisches Polycarbonatdiol mit endständigen Hydroxylgruppen und mit einem mittleren Molekulargewicht von 2000 g/mol und Funktionalität 2), XP 2586 (lineares Polycarbonat Polyol mit niedrigem Molekulargewicht (Mₙ = ca. 1000 g/mol und Funktionalität 2), Desmophen^{®} C 1200 (lineares aliphatisches Polycarbonat-Polyesterdiol, Äquivalentgewicht 1000 g/mol, beide Bayer MaterialScience AG, DE.

Als optional verwendete Katalysatoren können die aus der Polyurethanchemie an sich bekannten Katalysatoren zur Beschleunigung der NCO/OH-Reaktion, insbesondere metallorganische Verbindungen wie Dibutylzinn(II)diacetat, Dibutylzinn(II)dilaurat oder tertiäre Amine wie Triethylamin oder Diazabicyclooctan eingesetzt werden.

Als Blockierungsmittel werden CH-azide cyclische Ketone der allgemeinen Formel (1) eingesetzt, 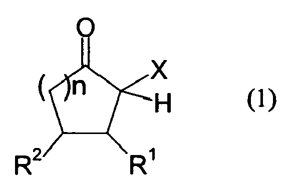 in welcher
- X: eine mesomer oder induktiv elektronenziehende Gruppe ist,
- R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sein können und
- n: eine ganze Zahl von 0 bis 5 ist.

Bei der elektronenziehenden Gruppe X kann es sich um alle Substituenten handeln, die durch mesomere oder induktive Effekte zu einer CH-Azidität des α-ständigen Wasserstoffes führen. Einen mesomeren Effekt im Sinne der Erfindung erzeugt ein Substituent, der eine Elektronenpaarlücke besitzt, so dass er dem System Elektronenpaare entzieht und sich deswegen die Elektronendichte des Systems verringert. Diese Substituenten erhöhen die Säurestärke, da sie die entstehenden Säurerestanionen durch Verteilung der negativen Ladung stabilisieren. Einen induktiven Effekt im Sinne der Erfindung erzeugen elektronenziehende Substituenten, die induzierende Gruppe besitzt hierbei eine negative Teilladung, so dass deswegen die Elektronendichte des Systems verringert und es so eine positive Teilladung erhält.

Dies können beispielsweise Estergruppen, Sulfoxidgruppen, Sulfongruppen, Nitrogruppen, Phosphonatgruppen, Nitrilgruppen, Isonitrilgruppen oder Carbonylgruppen sein. Bevorzugt sind Nitril- und Estergruppen, besonders bevorzugt sind Carbonsäuremethylester- und Carbonsäureethylestergruppen.

Die Verbindungen der allgemeinen Formel (1), können im Ring gegebenenfalls auch Heteroatome, wie Sauerstoff-, Schwefel-, oder Stickstoffatome enthalten, wobei für diesen Fall Sauerstoff bevorzugt ist, so dass das Strukturelement eines Lactons resultiert. Bevorzugt weist der Ring jedoch kein Heteroatom auf.

Bevorzugt ist n = 1 oder n = 2, was einer Ringgröße von 5 beziehungsweise 6 entspricht.

Bevorzugte cyclische Ketone der allgemeinen Formel (1) sind Cyclopentanon-2-carboxymethylester und -carboxyethylester, Cyclopentanon-2-carbonsäurenitril, Cyclohexanon-2-carboxymethylester und -carboxyethylester oder Cyclopentanon-2-carbonylmethan. Besonders bevorzugt sind Cyclopentanon-2-carboxymethylester und -carboxyethylester sowie Cyclohexanon-2-carboxymethylester und -carboxyethyl-ester.

Die Darstellung der Verbindungen der allgemeinen Formel (1) erfolgt entsprechend der deutschen Offenlegungsschrift DE 10132016A1.

Selbstverständlich können die genannten CH-aziden cyclischen Ketone sowohl in Mischungen untereinander als auch, wenn auch weniger bevorzugt, in beliebigen Mischungen mit anderen Blockierungsmitteln eingesetzt werden.

Geeignete weitere Blockierungsmittel sind beispielsweise Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1-Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel.

Falls überhaupt mitverwendet beträgt der Anteil dieser weiteren von CH-aziden cyclischen Ketonen verschiedenen Blockierungsmittel weniger als 40 Gew.-%, bevorzugt weniger als 20 Gew.-% bezogen auf die zur Blockierung eingesetzten Gesamtmenge an Blockierungsmittel.

Bevorzugt werden ausschließlich CH-azide cyclische Ketone der Formel (1), besonders bevorzugt ausschließlich Cyclopentanon-2-carboxyethylester und/oder Cyclopentanon-2-carboxymethylester eingesetzt.

Als Katalysatoren für die Blockierung können Alkali- und Erdalkalimetallbasen, wie z. B. gepulvertes Natriumcarbonat (Soda), Trinatriumphosphat oder Aminbasen wie DABCO (1,4-Diazabicyclo[2.2.2]octan) eingesetzt werden. Ebenfalls sind die Carbonate der Metalle der zweiten Nebengruppe sowie Zinksalze geeignet. Bevorzugt sind Natriumcarbonat, Kaliumcarbonat oder Zink-2-ethylhexanoat.

Der Gehalt freier NCO-Gruppen in den erfindungsgemäßen blockierten Polyisocyanat-Prepolymeren ist ≤3%, bevorzugt < 1 Gew.-%, besonders bevorzugt < 0,1 Gew.-%.

Beim erfindungsgemäßen Verfahren wird die Komponente B) mit überschüssigen Mengen der Polyisocyanatkomponente A) gegebenenfalls in Anwesenheit eines Katalysators umgesetzt. Anschließend wird gegebenenfalls unreagiertes Polyisocyanat durch kontinuierliche Destillation entfernt. Bevorzugt beträgt das Molverhältnis der OH-Gruppen der Verbindungen der Komponente B) zu den NCO-Gruppen der Verbindung der Komponente A) 1:≥2,1, besonders bevorzugt 1:5 bis 1:15 und ganz besonders bevorzugt 1:10 bis 1:15.

Die Umsetzung von B) mit A) erfolgt allgemein bei Temperaturen von 0 bis 250°C, bevorzugt von 20 bis 140 °C, besonders bevorzugt von 40 bis 100 °C, gegebenenfalls unter der Verwendung einer Katalysatorkomponente.

Anschließend wird mittels kontinuierlicher Destillation enthaltener Restmonomer bis zu einem Gehalt weniger als 10 % Restmonomer abdestilliert. Bevorzugt wird ein Bereich von 0 bis 5 %, besonders bevorzugt von 0 bis 1 % erreicht.

Unter einem kontinuierlichen Destillationsverfahren im Sinne der Erfindung wird ein Verfahren verstanden, bei dem nur eine jeweilige Teilmenge des Prepolymers aus dem Verfahrensschritt I) kurzzeitig einer erhöhten Temperatur ausgesetzt wird, während die noch nicht im Destillationsprozess befindliche Menge bei einer deutlich niedrigeren Temperatur verbleibt. Als erhöhte Temperatur ist dabei die zur Verdampfung der flüchtigen Bestandteile bei einem entsprechend gewählten Druck zu verstehen.

Bevorzugt wird die Destillation bei einer Temperatur von weniger als 180°C, besonders bevorzugt 80 bis 160°C, ganz besonders bevorzugt 100 bis 150 °C und bei Drücken von weniger als 10 mbar, besonders bevorzugt weniger als 2 mbar, ganz besonders bevorzugt bei 1 bis 0,01 mbar durchgeführt.

Bevorzugt beträgt die Temperatur der noch nicht im Destillationsprozess befmdliche Menge der prepolymerhaltigen Reaktionsmischung 0 bis 60°C, besonders bevorzugt 15 bis 40°C und ganz besonders bevorzugt 20 bis 40°C.

In einer bevorzugten Ausführungsform der Erfindung beträgt der Temperaturunterschied zwischen der Destillationstemperatur und der Temperatur der noch nicht im Destillationsprozess befindlichen Menge der prepolymerhaltigen Reaktionsmischung mindestens 5°C, besonders bevorzugt mindestens 15°C, ganz besonders bevorzugt 15 bis 40°C.

Bevorzugt wird die Destillation mit solch einer Geschwindigkeit geführt, dass ein Volumeninkrement der zu destillierenden prepolymerhaltigen Reaktionsmischung weniger als 10 min besonders bevorzugt weniger als 5 min der Destillationstemperatur ausgesetzt wird und anschließend gegebenenfalls durch aktive Kühlung wieder auf die Ausgangstemperatur der prepolymerhaltigen Reaktionsmischung vor der Destillation gebracht wird. Bevorzugt ist die dabei durchlaufene Temperaturbelastung derart, dass die Temperatur der Reaktionsmischung vor der Destillation bzw. des Prepolymers nach der Destillation gegenüber der angewandten Destillationstemperatur mindestens 5°C, besonders bevorzugt mindestens 15°C, ganz besonders bevorzugt 15 bis 40°C höher ist.

Bevorzugte kontinuierliche Destillationstechniken sind die Kurzweg-, Fallfilm- und/oder Dünnschichtdestillation (siehe hierzu beispielsweise Chemische Technik, Wiley-VCH, Band 1, 5. Auflage, Seiten 333-334).

Fallfilmverdampfer bestehen aus einem stehenden Bündel langer Rohre, in denen die zu verdampfende Flüssigkeit oben aufgegeben wird und als Film hinunterströmt. Im Mantelraum erfolgt die Beheizung durch Dampf. In den Rohren bilden sich Dampfblasen, die mit der Flüssigkeit abwärts strömen und für turbulente Bedingungen sorgen. Dampf und Flüssigkeit trennen sich am unteren Ende in einem Abscheidegefäß.

Dünnschichtverdampfer sind geeignete Apparate zur Verdampfung temperaturempfindlicher Stoffe, die nur kurzzeitig thermisch belastet werden dürfen. Die zu verdampfende Flüssigkeit wird oben in ein Rohr mit Mantelbeheizung aufgegeben. Sie strömt dort als Film herunter. Im Innern des Rohres rotiert ein an einer Welle aufgehängter Wischer und sorgt für eine konstante Filmdicke.

Bevorzugt wird als kontinuierliche Destillationstechnik die Dünnschichtdestillation mit den vorstehend genannten Parametern eingesetzt.

Zur Herstellung der erfindungsgemäßen Produkte, werden so erhaltene isocyanatgruppenhaltigen Polyurethan-Prepolymere schließlich, gegebenenfalls unter der Verwendung geeigneter Katalysatoren, noch mit dem Blockierungsmittel bei Temperaturen von 0 bis 250°C, bevorzugt 20 bis 140°C, besonders bevorzugt von 30 bis 100°C, umgesetzt.

Das Blockierungsmittel ist in der Menge einzusetzen, dass die eingesetzten Äquivalente der zur Isocyanatblockierung geeigneten Gruppen des Blockierungsmittels mindestens 60 Mol.-%, bevorzugt 75 Mol.-%, besonders bevorzugt 85 Mol.-% und ganz besonders bevorzugt mehr als 95 Mol.-%, der Menge der zu blockierenden Isocyanatgruppen entsprechen. Ein geringer Überschuss an Blockierungsmittel kann zweckmäßig sein, um eine vollständige Reaktion aller Isocyanatgruppen zu gewährleisten. In der Regel beträgt der Überschuss nicht mehr als 20 Mol.-%, bevorzugt nicht mehr als 15 Mol.% und besonders bevorzugt nicht mehr als 10 Mol.-%, bezogen auf die zu blockierenden Isocyanatgruppen. Ganz besonders bevorzugt liegt die Menge der zu NCO-Blockierung geeigneten Gruppen des Blockierungsmittels daher bei 95 Mol.-% bis 110 Mol.-%, bezogen auf die Menge der zu blockierenden Isocyanatgruppen des Polyurethan-Prepolymers.

In dem erfindungsgemäßen Verfahren werden jeweils, wenn Katalysatoren verwendet werden, bezogen auf die gesamte Reaktionsmischung, bis 10 Gew.-%, bevorzugt 0,005 bis 5 Gew.-%, besonders bevorzugt 0,005 bis 0,1 Gew.% Katalysator zugesetzt.

Im Allgemeinen kann zu jedem Zeitpunkt der Herstellung der erfindungsgemäßen Polyisocyanate ein oder mehrere unter den Verfahrensbedingungen inerte/s organische/s Lösemittel mitverwendet werden. Also solche kommen z.B. Triethylphosphat, Chlorbenzol, wobei diese nur beispielhaft zu verstehen sind, in Frage. Bevorzugt wird die Herstellung der erfindungsgemäßen Produkte ohne zusätzliche Lösemittel durchgeführt.

In einer bevorzugten Ausführungsform des erfindungsgemäßen Verfahrens wird in einem geeigneten Reaktionsgefäß die Komponente A bei einer Temperatur von 70 bis 120°C vorgelegt. Hierzu wird langsam eine Mischung der Komponente B hinzugetropft. Man lässt für eine gewisse Zeit nachrühren, bis der NCO-Wert den theoretischen Wert erreicht hat.

Anschließend wird bei einer Temperatur von 100 bis 150°C und einem Druck von 0,05 bis 1 mbar eine kontinuierliche Destillation der vorstehend genannten Art durchgeführt.

Zur Beschleunigung der anschließenden Blockierungsreaktion wird dann ein geeigneter Katalysator, wie z.B. Zink(II) 2-ethylhexanoat zugegeben, wobei die Temperatur der Reaktionsmischung vor oder nach der Zugabe des Katalysators gegebenenfalls auf einen Wert zwischen 50 und 100°C eingestellt wird. Nach dem Erreichen der gewünschten Temperatur wird nun das Blockierungsmittel zugegeben und die Reaktionsmischung solange erwärmt, bis der Gehalt an freien Isocyanatgruppen kleiner als 0,5 Gew.-%, bevorzugt kleiner als 0,2 Gew.-%, besonders bevorzugt kleiner als 0,1 Gew.-%, ist. Danach wird das Reaktionsgemisch abgekühlt und gegebenenfalls noch mit einem Reaktionsstopper, wie z.B. Benzoylchlorid oder Isophthalsäuredichlorid versehen.

Ein weiterer Gegenstand der Erfindung sind darüber hinaus Polyurethan-Prepolymere, die
i) Alkylenoxid-Ether Einheiten, und/oder
ii) Polyester Einheiten, und/oder
iii) Polyacrylat Einheiten, und/oder
iv) Polycarbonat Einheiten, sowie
v) Struktureinheiten der Formel (2) 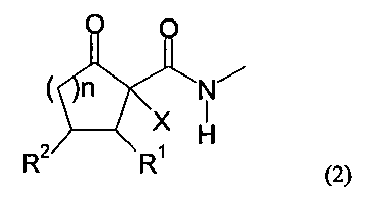 aufweisen, in welcher
   - X: eine mesomer oder induktiv elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
   - n: eine ganze Zahl von 0 bis 5 ist.

Alkylenoxid-Ether-Einheiten i) der erfindungsgemäßen Polyurethan-Prepolymere entsprechen Strukturen der Formel (3), 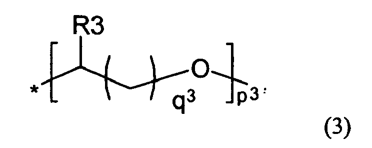 wobei
- R³:: Wasserstoff oder ein C1- bis C10-Alkylrest und
- p³:: eine Zahl zwischen 1 bis 1000, und
- q³:: 1 bis 3 ist.

Bevorzugt ist R³ = Wasserstoff oder eine Methylgruppe und p gleich 1 bis 300

Polyester Einheiten ii) der erfindungsgemäßen Polyurethan-Prepolymere entsprechen der Formel (4), 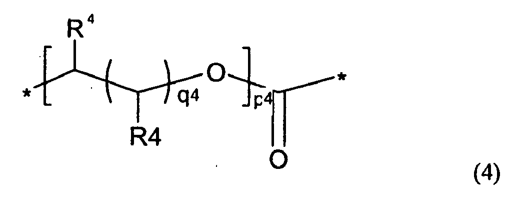 wobei
- R⁴:: Wasserstoff oder ein C1- bis C10-Alkylrest, gegebenenfalls auch miteinander verbunden und
- p⁴:: eine Zahl zwischen 1 bis 1000, und
- q⁴:: 1 bis 14 ist.

Polycarbonat-Einheiten iv) der erfindungsgemäßen Polyurethan-Prepolymere entsprechen der Formel (5), 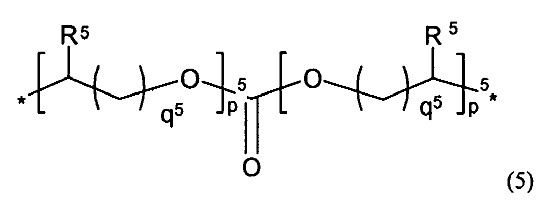 wobei
- R⁵:: Wasserstoff oder ein C1- bis C10-Alkylrest und
- p⁵:: eine Zahl zwischen 1 bis 1000, und
- q⁵:: 1 bis 11 ist.

Diese Strukturen können auch anteilig Carbonsäureestergruppen enthalten.

Die beschriebenen neuen niedrigviskosen Prepolymere können als Komponente a) mit verschiedenen Aminen (Komponente b), und/oder Polyhydroxyverbindungen (Komponente c) und gegebenenfalls mit oxiranhaltigen Verbindungen d) zu Reaktivsystemen formuliert und zu Beschichtungen ausgehärtet werden.

Als Polyamine in b) werden Polyamine eingesetzt, die mindestens zwei primäre Aminogruppen pro Molekül und gegebenenfalls noch sekundäre Aminogruppen aufweisen. Bevorzugt weisen diese ein mittleres Molekulargewicht von 60 bis 500 g/mol auf. Geeignet sind beispielsweise Ethylendiamin, 1,2- und 1,3-Diaminopropan, 1,4-Diaminobutan, 2,2,4-und/oder 2,4,4-Trimethylhexamethylendiamin, die induktiven Xylylendiamine, 1,4-Diaminocyclohexan, 4,4'-Diaminodicyclohexylmethan (PACM 20), 1,3-Diaminocyclopentan, 4,4'-Diaminodicyclohexylsulfon, 4,4'-Diaminodicyclohexylpropan-1,3, 4,4'-Diaminodicyclohexylpropan-2,2, 2,2'-Dimethyl-4,4'-diaminodicyclohexylmethan (Laromin), 3-Aminomethyl-3,3,5-trimethylcyclohexylamin (Isophorondiamin, IPDA), 3(4)-Aminomethyl-1-methylcyclohexylamin, technisches Bisaminomethyltricyclodecan, Octahydro-4.7-methanoinden-1.5-dimethanamin und Diethylentriamin oder Triethylentetramin.

Bevorzugte Polyamine sind solche der vorstehend genannten Art, die einen oder mehrere cycloaliphatische Ringe aufweisen. Hierzu gehören beispielsweise 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylanün (Isophorondiamin), 3- und 4-Aminomethyl-1-methylcyclohexylamin oder technisches Bisaminomethyltricyclodecan.

Vorteilhaft als Bestandteil der Aminkomponente b) einsetzbar sind Addukte, die durch Umsetzung eines Überschusses der genannten Polyamine mit Epoxidharzen der nachstehend genannten Art hergestellt werden.

Ebenso vorteilhaft in Komponente b) einsetzbar sind Polyetheramine, die durch Umsetzung von Polyetherpolyolen mit Ammoniak hergestellt werden und beispielsweise von Huntsman (Salt Lake City, US) unter dem Handelsnamen Jeffamin^{®} vertrieben werden.

Des weiteren vorteilhaft sind auch Polyamidharze als Aminkomponente b) für die Vernetzung des erfindungsgemäßen Prepolymers geeignet. Derartige Polyamidharze, zu denen die Polyaminoamide und die Polyaminoimidazoline gehören, werden u.a. von Henkel KGaA Düsseldorf, DE unter dem Handelsnamen "Versamid^{®}" vertrieben.

Selbstverständlich ist es auch möglich Gemische der genannte Polyamine als Aminkomponente b) einzusetzen.

Als Polyhydroxyverbindungen c) kommen aus der Polyurethanchemie an sich bekannte, höhermolekulare Polyetherpolyole in Frage, die in an sich bekannter Weise durch Alkoxylierung von geeigneten Starter-Molekülen zugänglich sind. Bevorzugt basieren die Polyether auf solchen Bausteinen , wie zuvor im Zusammenhang mit den Bestandteilen der Komponente B des erfindungsgemäßen Verfahrens beschrieben wurden.

Als Polyhydroxykomponente c) können jedoch auch Polybutandiolpolyether, Polyacrylatpolyole und Polyesterpolyole Verwendungen finden.

Gegebenenfalls können auch oxiranhaltige Verbindungen d) mit zur Aushärtung verwendet werden. Geeignet sind hierbei Epoxydharze, die im Durchschnitt mehr als eine Epoxydgruppe pro Molekül enthalten. Beispiele für geeignete Epoxydharze sind Glycidylether von mehrwertigen Alkoholen wie z.B. Butandiol, Hexandiol, Glycerin, hydriertem Diphenylolpropan oder mehrwertigen Phenolen wie z.B. Resorcin, Diphenylolpropan-2,2 (Bisphenol A) Diphenylolmethan (Bisphenol F) oder Phenol-Aldehyd-Kondensaten. Es können auch Glycidylester mehrwertiger Carbonsäuren, wie Hexahydrophthalsäure oder dimerisierte Fettsäure verwendet werden.

Sofern Epoxide der Komponente d) überhaupt verwendet werden, ist der Einsatz von flüssigen Epoxydharzen auf Basis von Epichlorhydrin und Diphenylolpröpan-2,2 (Bisphenol A) oder Diphenylolmethan (Bisphenol F) bzw. deren Mischungen bevorzugt.

Besonders bevorzugt ist die Verwendung von lichtechten, d.h. aliphatischen Epoxidverbindungen. Hiermit lassen sich dann lichtechte Beschichtungen zusammen mit den beschriebenen erfindungsgemäßen Prepolymeren herstellen. Geeignet sind somit Trimethylolpropantrisglycidylether, 4,4'-Dihydroxydicyclohexylmethan-bisglycidylether oder andere aliphatische Epoxidverbindungen.

Falls eine niedrige Viskosität der Mischungen gewünscht ist, kann diese durch die Verwendung monofunktioneller Epoxidverbindungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureglycidylester oder Epoxide wie Styroloxid oder 1,2-Epoxidodecan sowie Trimethylolpropantrisglycidylether.

In den erfindungsgemäßen lösemittelfreien, raumtemperaturhärtenden Reaktivsystemen beträgt das Verhältnis von Isocyanatgruppen zu Amingruppen 0,8:1 bis 1,2:1, bevorzugt 1:1.

Wird in den erfmdungsgemäßen lösemittelfreien, raumtemperaturhärtenden Reaktivsystemen die Komponente d) zugesetzt, so liegen im Allgemeinen pro Epoxidgruppe der Komponente d) 0,4 bis 0,9, vorzugsweise 0,5 bis 0,8 primäre Aminogruppen der Komponente b) und/oder OH-Gruppen der Verbindungen der Komponente c) und 0,02 bis 0,6, vorzugsweise 0,03 bis 0,5 blockierte Isocyanatgruppen der Komponente a) vor.

Zur Herstellung von gebrauchsfertigen Mischungen können den erfindungsgemäßen Reaktivsystemen die üblichen Hilfs- und Zusatzmittel wie beispielsweise Füllstoffe, Lösungsmittel, Verlaufshilfsmittel, Pigmente, Lösungsmittel, Reaktionsbeschleuniger oder Viskositätsregulatoren einverleibt werden. Beispielhaft genannt seien Reaktionsbeschleuniger wie Salicylsäure, Bis-(dimethylamino-methyl)-phenol oder Tris-(dimethylaminomethyl)-phenol, Füllstoffe wie Sande, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phthalsäureester oder andere Viskositätsregulatoren wie beispielsweise Benzylalkohol.

Selbstverständlich können der gebrauchsfertigen Mischung für applikationstechnische Zwecke gegebenenfalls bis zu 20 Gew.-%, vorzugsweise bis zu 10 Gew.-%, besonders bevorzugt bis zu 5 Gew.-% eines Lösemittels bzw. Lacklösemittels wie z.B. Methoxypropylacetat, Butylacetat, Xylol oder ähnliche zugefügt werden. Sollte an dieser Stelle Lösemittel eingesetzt werden, kann auch bei einem eventuellen Einsatz von Lösemitteln während der Synthese der erfindungsgemäßen Polyurethan-Prepolymere auf das Entfernen des Lösemittels verzichtet werden.

Ganz besonders bevorzugt im Sinne dieser Erfindung sind allerdings lösemittelfreie gebrauchsfertige Reaktivsysteme.

Die Komponente a) wird beim erfindungsgemäßen Verfahren zur Herstellung der Reaktivsysteme in beliebiger Reihenfolge mit der Komponente b) und/oder c) vermischt, bevorzugt unter Rühren. Danach können, ebenfalls in beliebiger Reihenfolge und wiederum gegebenenfalls unter Rühren, noch die Komponenten b) und/oder c) und/oder d) zugegeben werden.

Die Vernetzung der erfindungsgemäßen Reaktivsysteme aus a) und/oder b) und gegebenenfalls c) und/oder d) mit Polyaminen kann bei Temperaturen von -30°C und 250°C stattfinden bevorzugt bei Temperaturen von -30°C bis 150°C, besonders bevorzugt bei -20°C bis 80°C und ganz besonders bevorzugt bei 0°C bis 40°C. Die Härtung erfolgt bei einer relative Feuchte von vorzugsweise 10 % bis 90 % innerhalb von wenigen Minuten bis zu einigen Tagen. Durch erhöhte Temperaturen, d. h. oberhalb von etwa 50°C, kann die Aushärtung zusätzlich forciert werden, was in der Praxis ebenfalls gewünscht sein kann. Hierbei können für eine kurze Zeit, in der die Materialen nicht beschädigt werden, auch Temperaturen von bis zu 250°C erreicht werden.

Die erfmdungsgemäßen blockierten Polyisocyanate wie auch die Reaktivsysteme eignen sich zur Herstellung von Beschichtungen, Klebstoffen, Dichtungsmassen, Vergussmassen oder Formteilen in allen Anwendungsgebieten, wo gute Haftung, Chemikalienfestigkeit, sowie hohe Schlag- und Stoßfestigkeit, verbunden mit guter Flexibilität und Elastizität gefordert werden. Besonders gut geeignet sind die erfindungsgemäßen Systeme als Boden- und sonstigen Beschichtungen. Sie zeichnen sich durch hohe Oberflächengüte und hohen Glanz aus.

Die erfindungsgemäßen Reaktivsysteme können beispielsweise durch Gießen, Streichen, Tauchen, Spritzen, Fluten, Rakeln oder Walzen auf die zu beschichtende Oberfläche applizierte werden. Je nach Anwendungsgebiet können somit unterschiedliche Schichtdicken erzielt werden.

### Beispiele

### Vorbemerkungen:

Alle Prozentangaben sind, soweit nicht anders vermerkt, als Gewichtsprozent (Gew.-%) zu verstehen. Desmophen^{®} und Desmodur^{®} sind Markenzeichen der Bayer Materialscience AG, Leverkusen, DE.

Die Hazen-Farbzahl wurde nach DIN 53995 mit einem Farbzahlmessgerät Lico 400, Dr. Lange GmbH, Berlin, DE bestimmt.

Die Viskosität wurde mit einem Haake Roto Visko 1, Messscheibe 3 mit D= 20 mm, nach dem Prinzip Platte / Platte, bei T= 22,2 °C und Element 5 bestimmt.

Der NCO-Gehalt wurde in Aceton als Lösemittel mit einem Dibutylaminüberschuss, und 1 mol/l HCl nach DIN EN ISO 11909 titriert.

Polyol A: PO Polyether, gestartet auf Bisphenol A / Trimethylolpropan, OH-Zahl 370 mg KOH/g, Funktionalität 2

Desmophen® 550U: PO Polyetherpolyol, OH-Zahl 380 mg KOH/g Funktionalität 3

Desmophen® V 3970: PO Polyether, Funktionalität 3, OH-Zahl 34,8 mg KOH/g

### Herstellung von TDI-Prepolymeren für Beschichtungen

### 1a) Herstellung eines TDI Prepolymers unter Dünnschichtung:

In einem 11 Vierhalskolben mit Rückflusskühler und Innenthermometer und mechanischem Rührer wurden in einer Stickstoffatmosphäre 516,8 g TDI (80% 2,4-Diisocyanatotoluol und 20% 2,6-Diisocyanatotoluol) (5,94 val, Äquivalentgewicht 87 g/val), 0,41 g Triphenylphosphin und 0,41 g Ionol (2,4-Ditert.-butylphenol) bei einer Temperatur von 60°C vorgelegt. Zu dieser Mischung tropfte man langsam über einen Zeitraum von 60 Minuten ein Gemisch von 254,6 g Desmophen^{®} V 3970 (0,16 val, Äquivalentgewicht 1591,0 g/val), 35,8 g Polyol A (0,13 val, Äquivalentgewicht 275,0 g/val) und 5,8 g Desmophen^{®} 550U (0,04 val, Äquivalentgewicht 145,8 g/val). Während der Zugabe stieg die Temperatur nicht über 70°C. Nach ca. einer Stunde Nachrühren war der NCO-Wert von 28,7 % (theoretischer Wert 29,0%) erreicht. Anschließend wurde über einen Zeitraum von 120 Minuten bei einer Temperatur von 150°C und einem Druck von 0,05 mbar eine Dünnschichtdestillation durchgeführt. Das erhaltene Produkt hatte einen NCO-Wert von 4,2 % (theoretischer Wert 3,9 %) und ein Äquivalentgewicht von 1000,0 g/val). Die Viskosität betrug 18.010 mPas. Die Farbzahl betrug 20 [Apha].

Das auf diese Weise erhaltene Prepolymer wurden weiter zu Bausteinen für Beschichtungen umgesetzt.

### 1b) Abspalterfrei blockiertes TDI Prepolymer aus gedünnschichtetem Prepolymer :

In einem 250 ml Vierhalskolben mit Rückflußkühler, Innenthermometer und mechanischem Rührer wurden 90,0 g des oben beschriebenen TDI-Prepolymeren 1 (0,09 val, Äquivalentgewicht 1000,0 g/val) mit 0,05 g Triphenylphosphin, 0,05 g Ionol (2,4-Di-tert.-butylphenol), 11,6 g Rhodiasolv^{®} RPDE (Hauptbestandteil Adipinsäure- und Glutarsäurediethylester, Rhodia PPMC / FR) und 0,1 g Zink-2-ethylhexanoat (Borchers GmbH, Langenfeld, DE) bei einer Temperatur von 25°C unter Stickstoffatmosphäre vorgelegt. Zu dieser Mischung wurde über einen Zeitraum von 15 Minuten eine Menge von 14,1 g Cyclopentanon-2-carboxyethylester (0,09 val, Äquivalentgewicht 156,2 g/val) hinzugetropft. Anschließend wurde auf eine Temperatur von 40°C erhitzt. Man ließ sechs Stunden reagieren, danach war noch ein NCO-Wert < 0,1 % nachweisbar. Das erhaltene Produkt hatte ein Äquivalentgewicht von 1285,6 g/val. Die Viskosität betrug 18.060 mPas. Die Farbzahl betrug 25 [Apha].

### 2a) Herstellung eines TDI Prepolymeren ohne Dünnschichtung:

In einem 500 ml Dreihalskolben mit Rückflusskühler und Innenthermometer und mechanischem Rührer wurden in einer Stickstoffatmosphäre 57,4 g TDI (T80, 80% 2,4-Diisocyanatotoluol und 20% 2,6-Diisocyanatotoluol) (0,66 val, Äquivalentgewicht 87 g/val), 0,18 g Triphenylphosphin und 0,18 g Ionol (2,4-Ditert.-butylphenol) bei einer Temperatur von 60°C vorgelegt. Zu dieser Mischung tropfte man langsam über einen Zeitraum von 60 Minuten ein Gemisch von 254,6 g Desmophen^{®} V 3970 (0,16 val, Äquivalentgewicht 1591,0 g/val), 35,8 g Polyol A (0,13 val, Äquivalentgewicht 275,0 g/val) und 5,8 g Desmophen® 550U (0,04 val, Äquivalentgewicht 145,8 g/val). Während der Zugabe stieg die Temperatur nicht über 70°C. Nach ca. drei Stunden Nachrühren war der NCO-Wert von 3,75 % (theoretischer Wert 3,9 %) erreicht. Das erhaltene Produkt hatte ein Äquivalentgewicht von 1120 g/val). Die Viskosität betrug 18.320 mPas. Die Farbzahl betrug 20 [Apha].

Das auf diese Weise erhaltene Prepolymer wurden weiter zu Bausteinen für Beschichtungen umgesetzt.

### 2b) Abspalterfrei blockiertes TDI Prepolymer aus nicht gedünnschichtetem Prepolymer:

In einem 250 ml Vierhalskolben mit Rückflußkühler, Innenthermometer und mechanischem Rührer wurden 89,6 g des oben beschriebenen TDI-Prepolymeren 1 (0,08 val, Äquivalentgewicht 1120 g/val) mit 0,05 g Triphenylphosphin, 0,05 g Ionol (2,4-Di-tert.-butylphenol), 11,6 g Rhodiasolv^{®} RPDE (Hauptbestandteil Adipinsäure- und Glutarsäurediethylester, Rhodia PPMC / FR) und 0,11 g Zink-2-ethylhexanoat (Borchers GmbH, Langenfeld, DE) vorgelegt bei einer Temperatur von 25°C unter Stickstoffatmosphäre. Zu dieser Mischung wurde über einen Zeitraum von 15 Minuten eine Menge von 14,1 g Cyclopentanon-2-carboxyethylester (0,09 val, Äquivalentgewicht 156,2 g/val) hinzugetropft. Anschließend wurde auf eine Temperatur von 40°C erhitzt. Man ließ fünf Stunden reagieren, danach war noch ein NCO-Wert < 0,1 % nachweisbar. Das erhaltene Produkt hatte ein Äquivalentgewicht von 1285,6 g/val. Die Viskosität betrug 35.400 mPas. Die Farbzahl betrug 25 [Apha].

| | | |
|---|---|---|
| Vergleich: | Prepolymer mit Dünnschichtung: | 18010 mPas |
| | Prepolymer ohne Dünnschichtung: | 18320 mPas |
| | Blockiertes Prepolymer 2, 90% FK | 35400 mPas |
| | Blockiertes Prepolymer 1, 90% FK | 18060 mPas |

### Herstellvorschriften für HDI Prepolymere mit/ohne Dünnschichtung

### 3a) Herstellung eines Hexamethylendiisocyanat (HDI)-Polyether-Prepolymeren mit Dünnschichtung:

In einem 21 Vierhalskolben mit Rückflusskühler und Innenthermometer und mechanischem Rührer wurden in einer Stickstoffatmosphäre 1372,1 g HDI (16,3 val, Äquivalentgewicht 84 g/val), 0,98 g Triphenylphosphin und 0,98 g Ionol (2,4-Ditert.-butylphenol) bei einer Temperatur von 100°C vorgelegt. Zu dieser Mischung tropfte man langsam über einen Zeitraum von 60 Minuten ein Gemisch von 442,5 g Desmophen® V 3970 (0,27 val, Äquivalentgewicht 1609,2 g/val), 123,5 g Polyol A (0,44 val, Äquivalentgewicht 280,7 g/val) und 30,6 g Desmophen^{®} 550U (0,19 val, Äquivalentgewicht 159,1 g/val). Während der Zugabe stieg die Temperatur nicht über 105°C. Nach ca. vier Stunden Nachrühren war der NCO-Wert von 32,5 % (theoretischer Wert 32,9%) erreicht. Anschließend wurde über einen Zeitraum von 8 Stunden bei einer Temperatur von 150°C und einem Druck von 0,05 mbar eine Dünnschichtdestillation durchgeführt. Das erhaltene Produkt hatte einen NCO-Wert von 4,9 % (theoretischer Wert 5,1 %) und ein Äquivalentgewicht von 857,1 g/val). Die Viskosität betrug 4400 mPas. Die Farbzahl betrug ca. 50 [Apha].

Das auf diese Weise erhaltene Prepolymer wurden weiter zu Bausteinen für Beschichtungen umgesetzt.

### 3b) Abspalterfrei blockiertes gedünnschichtetes Polyether-Prepolymer auf der Basis Hexamethylendüsocyanat (erfindungsgemäß):

In einem 250 ml Vierhalskolben mit Rückflusskühler, Innenthermometer und mechanischem Rührer wurden 85,7 g des oben beschriebenen HDI-Prepolymeren 1 (0,1 val, Äquivalentgewicht 857,1 g/val) mit 0,05 g Triphenylphosphin, 0,05 g Ionol (2,4-Di-tert.-butylphenol), und 0,11 g Zink-Neodecanoat,(95%ig) bei einer Temperatur von 25°C unter Stickstoffatmosphäre vorgelegt. Das Triphenylphosphin, Jonol und der Katalysator wurden zuvor in 0,5 g Rhodiasolv^{®} RPDE (Hauptbestandteil Adipinsäure- und Glutarsäurediethylester, Rhodia PPMC / FR) gelöst. Zu dieser Mischung wurde über einen Zeitraum von 30 Minuten eine Menge von 14,2 g Cyclopentanon-2-carboxymethylester (0,1 val, Äquivalentgewicht 142,2 g/val) hinzugetropft. Anschließend wurde auf eine Temperatur von 40°C erhitzt. Man ließ 2h Stunden reagieren, danach war kein NCO-Wert nachweisbar. Das erhaltene Produkt hatte ein Äquivalentgewicht von 1007,1 g/val. Die Viskosität betrug 39.500 mPas. Die Farbzahl betrug ca. 50 [Apha].

### 3c) Nonylphenol blockiertes gedünnschichtetes Polyether-Prepolymer auf der Basis Hexamethylendiisocyanat (Vergleich):

In einem 25 ml Zweihalskolben mit Innenthermomether wurden 8,3 g des gedünnschichteten HDI-Polyether-Prepolymers 3a) (Äquivalentgewicht 857,1 g/mol, 1 val) vorgelegt. Hierzu wurden 2,2 g Nonylphenol (Äquivalentgewicht 220,4 g/mol, 1 val) hinzugegeben. Man ließ bei guter Rührwirkung bei einer Temperatur von 60°C in einer Stickstoffatmosphäre rühren, bis das Produkt keinen NCO-Wert mehr aufwies. Die Viskosität des Produktes betrug ca. 100.000 mPas. Die Farbzahl betrug ca. 50 [Apha].

### 3d) Herstellung eines Hexamethylendiisocyanat (HDI)-Polyether Prepolymers ohne Dünnschicht-Verfahren

In einem 100 ml Vierhalskolben mit Rückflusskühler und Innenthermometer und mechanischem Rührer wurden in einer Stickstoffatmosphäre 22,2 g HDI (Hexamethylendiisocyanat) (0,264 val, Äquivalentgewicht 84 g/val), 0,05 g Triphenylphosphin und 0,05 g Ionol (2,4-Ditert.-butylphenol) bei einer Temperatur von 100°C vorgelegt. Dazu tropfte man langsam über einen Zeitraum von 60 Minuten ein Gemisch von 64,4 g Desmophen® V 3970 (0,04 val, Äquivalentgewicht 1609,2 g/val), 18,0 g Polyol A (0,064 val, Äquivalentgewicht 280,7 g/val) und 4,5 g Desmophen^{®}550U (0,028 val, Äquivalentgewicht 159,1 g/val). Während der Zugabe stieg die Temperatur nicht über 105°C. Nach ca. vier Stunden Nachrühren war der NCO-Wert von 4,7 % (theoretischer Wert 5,08%) erreicht. Das Produkt hat ein Äquivalentgewicht von 893,6 g/val). Die Viskosität betrug 33.100 mPas.

### 3e) Abspalterfrei blockiertes nicht gedünnschichtetes Polyether Prepolymer auf der Basis von Hexamethylendüsocyanat (Vergleich):

In einem 250 ml Vierhalskolben mit Rückflußkühler, Innenthermometer und mechanischem Rührer wurden 71,5 g des oben beschriebenen HDI-Prepolymeren (0,08 val, Äquivalentgewicht 893,6 g/val) mit 0,09 g Zink-Neodecanoat (FK:95%), bei einer Temperatur von 25°C unter Stickstoffatmosphäre vorgelegt. Zu dieser Mischung wurde über einen Zeitraum von 15 Minuten eine Menge von 11,4 g Cyclopentanon-2-carboxymethylester (0,08 val, Äquivalentgewicht 142,2 g/val) hinzugetropft. Anschließend wurde auf eine Temperatur von 40°C erhitzt. Man ließ neun Stunden reagieren, danach war kein NCO-Wert nachweisbar. Das erhaltene Produkt hatte ein Äquivalentgewicht von 1037,4 g/val. Die Viskosität betrug 192.000 mPas.

### 3f) Nonylphenol blockiertes nicht-gedünnschichtetes Polyether-Prepolymer auf der Basis Hexamethylendüsocyanat (Vergleich):

In einem 25 ml Zweihalskolben mit Innenthermometer wurden 8,3 g des gedünnschichteten HDI-Polyether-Prepolymers 3d) (Äquivalentgewicht 893,6 g/mol, 1 val) vorgelegt. Hierzu wurden 2,2 g Nonylphenol (Äquivalentgewicht 220,4 g/mol, 1 val) hinzugegeben. Man lies bei guter Rührwirkung bei einer Temperatur von 60°C in einer Stickstoffatmosphäre rühren, bis das Produkt keinen NCO-Wert mehr aufwies. Die Viskosität des Produktes betrug »250.000 mPas. Die Farbzahl betrug ca. 50 [Apha].

| | | |
|---|---|---|
| Vergleich: | HDI Prepolymer mit Dünnschichtung (1): | 4400 mPas |
| | HDI Prepolymer ohne Dünnschichtung (2): | 33100 mPas |
| | CPME-blockiertes Prepolymer 1 | 39500 mPas |
| | CPME-blockiertes Prepolymer 2 | 192000 mPas |
| | Nonylphenol-blockiertes Prepolymer 1 | 100000 mPas |
| | Nonylphenol-blockiertes Prepolymer 2 | > 250000 mPas |

Wie aus den vorstehenden Beispielen zu entnehmen ist, ist es im Fall von TDI basierten Prepolymeren hinsichtlich der Viskosität unerheblich, ob eine Restmonomerenabtrennung per kontinuierlicher Destillation durchgeführt wird oder nicht. Bei den HDI basierten Prepolymeren hingegen tritt im Falle der Dünnschichtdestillation ein signifikanter Viskositätsabfall auf 4400 gegenüber 33100 auf.

Bei der anschließenden Blockierung steigt beim HDI-System die Viskosität an, wobei bei Produkten des erfindungsgemäßen Verfahrens insgesamt deutlich niedrigere Werte erreicht werden als bei den Vergleichsversuchen, wo auf Dünnschichtdestillation verzichtet wurde.

### 4a) HDI PO-Polyether-Urethan-Prepolymer

In einem 21 Vierhalskolben mit Rückflusskühler und Innenthermometer und mechanischem Rührer wurden in einer Stickstoffatmosphäre 420 g HDI (5 val, Äquivalentgewicht 84 g/val) bei einer Temperatur von 100°C vorgelegt. Zu dieser Mischung tropfte man langsam über einen Zeitraum von 60 Minuten ein Gemisch von 804,6 g Desmophen® V 3970 (0,5 val, Äquivalentgewicht 1609,2 g/val). Während der Zugabe stieg die Temperatur nicht über 105°C. Nach ca. vier Stunden Nachrühren war der NCO-Wert von 15,43 % (theoretischer Wert) erreicht. Anschließend wurde über einen Zeitraum von 6 Stunden bei einer Temperatur von 150°C und einem Druck von 0,05 mbar eine Dünnschichtdestillation durchgeführt. Das erhaltene Produkt hatte einen NCO-Wert von 1,85 % (theoretischer Wert) und ein Äquivalentgewicht von 2270,3 g/val). Der Restmonomerengehalt betrug 0,03%. Die Viskosität betrug 4400 mPas. Die Farbzahl betrug ca. 30 [Apha].

### 4b) Abspalterfrei blockiertes PO-Polyether Prepolymer auf der Basis von Hexamethylendüsocyanat(erfindungsgemäß):

In einem 1000 ml Vierhalskolben mit Rückflusskühler, Innenthermometer und mechanischem Rührer wurden bei einer Temperatur von 25°C unter Stickstoffatmosphäre 681,1 g des oben beschriebenen HDI-Prepolymeren (0,33 val, Äquivalentgewicht 2270,3 g/val) mit 0,36 g Zink-2-ethylhexanoat vorgelegt. Zu dieser Mischung wurde über einen Zeitraum von 30 Minuten eine Menge von 42,7 g Cyclopentanon-2-carboxymethylester (0,33 val, Äquivalentgewicht 142,2 g/val) hinzugetropft. Anschließend wurde auf eine Temperatur von 40°C erhitzt. Man ließ 2 Stunden reagieren, danach war kein NCO-Wert nachweisbar. Das erhaltene Produkt hatte ein Äquivalentgewicht von 2413,8 g/val. Die Viskosität betrug 43.500 mPas. Die Farbzahl betrug ca. 30 [Apha].

### 4c) HDI POlEO-Polyether-Urethan-Prepolymer

In einem 11 Vierhalskolben mit Rückflusskühler und Innenthermometer und mechanischem Rührer wurden in einer Stickstoffatmosphäre 252 g HDI (3,3 val, Äquivalentgewicht 84 g/val) bei einer Temperatur von 100°C vorgelegt. Zu dieser Mischung tropfte man langsam über einen Zeitraum von 60 Minuten 357,5 g Desmophen^{®} V 3970 (0,3 val, Äquivalentgewicht 1191,5 g/val). Während der Zugabe stieg die Temperatur nicht über 105°C. Nach ca. vier Stunden Nachrühren war der NCO-Wert von 18,61 % (theoretischer Wert) erreicht. Anschließend wurde über einen Zeitraum von 2 Stunden bei einer Temperatur von 150°C und einem Druck von 0,05 mbar eine Dünnschichtdestillation durchgeführt. Das erhaltene Produkt hatte einen NCO-Wert von 2,55 % (theoretischer Wert). Der Restmonomerengehalt betrug 0,03%. Die Viskosität betrug 14.000 mPas. Die Farbzahl betrug ca. 30 [Apha].

### 4d) Abspalterfrei blockiertes PO-Polyether Prepolymer auf der Basis von Hexamethylendiisocyanat (erfindungsgemäß):

In einem 250 ml Vierhalskolben mit Rückflusskühler, Innenthermometer und mechanischem Rührer wurden bei einer Temperatur von 25°C unter Stickstoffatmosphäre 164,7 g des oben beschriebenen HDI-Prepolymeren (0,1 val, Äquivalentgewicht 1647,1 g/val) mit 0,09 g Zink-2-ethylhexanoat vorgelegt. Zu dieser Mischung wurde über einen Zeitraum von 30 Minuten eine Menge von 15,62 g Cyclopentanon-2-carboxymethylester (0,1 val, Äquivalentgewicht 156,2 g/val) hinzugetropft. Anschließend wurde auf eine Temperatur von 40°C erhitzt. Man ließ 2 Stunden reagieren, danach war kein NCO-Wert nachweisbar. Das erhaltene Produkt hatte ein Äquivalentgewicht von 1803,3 g/val. Die Viskosität betrug 43.500 mPas. Die Farbzahl betrug ca. 35 [Apha].

### 4e) HDI C4-Polyether-Urethan-Prepolymer

In einem 51 Vierhalskolben mit Rückflusskühler und Innenthermometer und mechanischem Rührer wurden in einer Stickstoffatmosphäre 1092 g HDI (13 val, Äquivalentgewicht 84 g/val) bei einer Temperatur von 100°C vorgelegt. Zu dieser Mischung tropfte man langsam über einen Zeitraum von 60 Minuten ein Gemisch von 632,5 g Terathane^{®} 1000 (C4 Polyether auf THF Basis, DuPont, USA) (1,3 val, Äquivalentgewicht 486,5 g/val). Während der Zugabe stieg die Temperatur nicht über 105°C. Nach ca. zwei Stunden Nachrühren war der NCO-Wert von 28,5 % erreicht. Anschließend wurde über einen Zeitraum von 4 Stunden bei einer Temperatur von 150°C und einem Druck von 0,05 mbar eine Dünnschichtdestillation durchgeführt. Das erhaltene Produkt hatte einen NCO-Wert von 5,7 %. Der Restmonomerengehalt betrug 0,03%. Die Viskosität betrug 2330 mPas. Die Farbzahl betrug ca. 30 [Apha].

### 4f) Abspalterfrei blockiertes C4-Polyether Prepolymer auf der Basis von Hexamethylendiisocyanat (erfindungsgemäß):

In einem 500 ml Dreihalskolben mit Rückflusskühler, Innenthermometer und mechanischem Rührer wurden bei einer Temperatur von 25°C unter Stickstoffatmosphäre 294,7 g des oben beschriebenen HDI-Prepolymeren (0,4 val, Äquivalentgewicht 736,8 g/val) mit 0,176 g Zink-2-ethyl-hexanoat vorgelegt. Zu dieser Mischung wurde über einen Zeitraum von 30 Minuten eine Menge von 56,9 g Cyclopentanon-2-carboxyethylester (0,4 val, Äquivalentgewicht 142,2 g/val) hinzugetropft. Anschließend wurde auf eine Temperatur von 40°C erhitzt. Man ließ 4 Stunden reagieren, danach war kein NCO-Wert nachweisbar. Das erhaltene Produkt hatte ein Äquivalentgewicht von 879 g/val. Die Viskosität betrug 16400 mPas. Die Farbzahl betrug ca. 35 [Apha].

### 5a) HDI Polyesterpolyol Urethan

In einem 11 Vierhalskolben mit Rückflusskühler und Innenthermometer und mechanischem Rührer wurden in einer Stickstoffatmosphäre bei einer Temperatur von 100°C 420 g HDI (5 val, Äquivalentgewicht 84 g/val) vorgelegt. Zu dieser Mischung tropfte man langsam über einen Zeitraum von 60 Minuten ein Gemisch von 200 g eines Poly-ε-caprolacton Polyesters (0,5 val, Äquivalentgewicht 400 g/val). Dieser ist durch Reaktion von z. B. Butandiol 1,4 als Starter mit -ε-Caprolacton in Gegenwart des Katalysators Zinn 2-ethylhexanoat erhältlich. Während der Zugabe stieg die Temperatur nicht über 105°C. Nach ca. vier Stunden Nachrühren war der NCO-Wert von 30,3 % erreicht. Anschließend wurde über einen Zeitraum von 2 Stunden bei einer Temperatur von 150°C und einem Druck von 0,05 mbar eine Dünnschichtdestillation durchgeführt. Das erhaltene Produkt hatte einen NCO-Wert von 6,85 % (theoretischer Wert) und ein Äquivalentgewicht von 613,1 g/val). Der Restmonomerengehalt betrug 0,03%. Die Viskosität betrug 2530 mPas. Die Farbzahl betrug ca. 30 [Apha].

### 5b) Abspalterfrei blockiertes Prepolymer auf der Basis von Hexamethylendiisocyanat und einem Poly-ε-caprolacton Polyester (erfindungsgemäß):

In einem 1000 ml Vierhalskolben mit Rückflusskühler, Innenthermometer und mechanischem Rührer wurden bei einer Temperatur von 25°C unter Stickstoffatmosphäre 122,6 g des oben beschriebenen HDI-Prepolymeren (0,2 val, Äquivalentgewicht 613,1 g/val) mit 0,08 g Zink-2-ethylhexanoat vorgelegt. Zu dieser Mischung wurde über einen Zeitraum von 30 Minuten eine Menge von 31,2 g Cyclopentanon-2-carboxyethylester (0,2 val, Äquivalentgewicht 156,2 g/val, Funktionalität 2) hinzugetropft. Anschließend wurde auf eine Temperatur von 40°C erhitzt. Man ließ 2 Stunden reagieren, danach war kein NCO-Wert nachweisbar. Das erhaltene Produkt hatte ein blockierten NCO-Wert von 5,46%. Die Viskosität betrug 23600 mPas. Die Farbzahl betrug ca. 30 [Apha].

### 6a) HDI Polycarbonatpolyol Urethan

In einem 21 Vierhalskolben mit Rückflusskühler und Innenthermometer und mechanischem Rührer wurden in einer Stickstoffatmosphäre bei einer Temperatur von 100°C 1092 g HDI (13 val, Äquivalentgewicht 84 g/val) vorgelegt. Zu dieser Mischung tropfte man langsam über einen Zeitraum von 60 Minuten ein Gemisch von 627,3 g eines Polycarbonatdiols auf der Basis 3-Methyl-1,5-Pentandiol mit einem Molekulargewicht von ca. 650 g/mol (1,3 val, Äquivalentgewicht 482,5 g/val). Während der Zugabe stieg die Temperatur nicht über 105°C. Nach ca. 1,5 Stunden Nachrühren war der NCO-Wert von 27,9 % erreicht. Anschließend wurde über einen Zeitraum von 2 Stunden bei einer Temperatur von 150°C und einem Druck von 0,05 mbar eine Dünnschichtdestillation durchgeführt. Das erhaltene Produkt hatte einen NCO-Wert von 7,3 % (theoretischer Wert) und ein Äquivalentgewicht von 575,3 g/val). Der Restmonomerengehalt betrug 0,03%. Die Viskosität betrug ca. 120.000 mPas. Die Farbzahl betrug ca. 30 [Apha].

### 6b) Abspalterfrei blockiertes Prepolymer auf der Basis von Hexamethylendiisocyanat und einem Polycarbonatpolyol (erfindungsgemäß):

In einem 2000 ml Vierhalskolben mit Rückflusskühler, Innenthermometer und mechanischem Rührer wurden bei einer Temperatur von 25°C unter Stickstoffatmosphäre 805,4 g des oben beschriebenen HDI-Prepolymeren (1,4 val, Äquivalentgewicht 573,3 g/val) mit 0,502 g Zink-2-ethylhexanoat vorgelegt. Zu dieser Mischung wurde über einen Zeitraum von 30 Minuten eine Menge von 198,8 g Cyclopentanon-2-carboxymethylester (1,4 val, Äquivalentgewicht 142 g/val) hinzugetropft. Anschließend wurde auf eine Temperatur von 40°C erhitzt. Man ließ 2 Stunden reagieren, danach war kein NCO-Wert nachweisbar. Die Viskosität betrug 305000 mPas. Die Farbzahl betrug ca. 30 [Apha].

Ein analog hergestelltes Prepolymer, bei dem auf die erfindungsgemäße Dünnschichtdestillation verzichtet wurde, war nicht mehr fließfähig [keine Viskositätsmessung möglich].

### 7a) HDI Polyacrylatpolyol Urethan

In einem 21 Vierhalskolben mit Rückflusskühler und Innenthermometer und mechanischem Rührer wurden in einer Stickstoffatmosphäre bei einer Temperatur von 100°C 420 g HDI (5 val, Äquivalentgewicht 84 g/val) vorgelegt. Zu dieser Mischung tropfte man langsam über einen Zeitraum von 60 Minuten ein Gemisch von 444,4 g eines Polyacrylatpolyols Acryflow^{®} P60 (Lyondell, US), (0,5 val, Äquivalentgewicht 888,9 g/val). Das Polyacrylatpolyol wurde während der Zugabe leicht erwärmt. Während der Zugabe stieg die Temperatur nicht über 105°C. Nach ca. 1,5 Stunden Nachrühren war der NCO-Wert von 21,9 % erreicht. Anschließend wurde über einen Zeitraum von 2 Stunden bei einer Temperatur von 150°C und einem Druck von 0,05 mbar eine Dünnschichtdestillation durchgeführt. Das erhaltene Produkt hatte einen NCO-Wert von 3,35 % (theoretischer Wert) und ein Äquivalentgewicht von 1253,7 g/val. Der Restmonomerengehalt betrug 0,03 %. Die Viskosität betrug 180.000 mPas. Die Farbzahl betrug ca. 30 [Apha].

### 7b) Abspalterfrei blockiertes Prepolymer auf der Basis von Hexamethylendiisocyanat und einem Polyacrylatpolyol:

In einem 2000 ml Vierhalskolben mit Rückflusskühler, Innenthermometer und mechanischem Rührer wurden bei einer Temperatur von 25°C unter Stickstoffatmosphäre 960 g des oben beschriebenen HDI-Prepolymeren (0,8 val, Äquivalentgewicht 1200 g/val) mit 0,537 g Zink-2-ethylhexanoat vorgelegt. Zu dieser Mischung wurde über einen Zeitraum von 30 Minuten eine Menge von 113,6 g Cyclopentanon-2-carboxymethylester (1,4 val, Äquivalentgewicht 142 g/val) hinzugetropft. Anschließend wurde auf eine Temperatur von 40°C erhitzt. Man ließ 2 Stunden reagieren, danach war kein NCO-Wert nachweisbar. Die Viskosität betrug 295.000 mPas. Die Farbzahl betrug ca. 30 [Apha].

Ein analog hergestelltes Prepolymer, bei dem auf die erfindungsgemäße Dünnschichtdestillation verzichtet wurde, war nicht mehr fließfähig [keine Viskositätsmessung möglich].

Das abspalterfrei blockierte Prepolymer 3b) wurde mit verschiedenen Aminen zu Beschichtungen umgesetzt. Die Eigenschaften der Beschichtungen sind in der folgenden Tabelle beschrieben:

| **Beispiel** | **1** | **2** | **3** |
|---|---|---|---|
| Bl. Prepolymer 3b) (HDI) | 100 | 100 | 100 |
| Laromin C 260 | 12,1 | | |
| PACM 20 1:1 IPA | | 21,3 | |
| IPDA | | | 8,6 |
| Verlaufsmittel | 1,1 | 1,2 | 1,1 |
| Topfzeit | 60 min | 45-60 min | 15 min |
| Modul 100 % [MPa] | 2,9 | 1,5 | 1,2 |
| 0-Wert | 16,7/760 | 6,4/630 | 7,5/820 |
| Optik | Sehr gut | Sehr gut | Sehr gut |

Trocknungsbedingungen: Einbrennofen, Temperatur 100-130-170°C, langsam laufendes Band, beschichtet auf 200 µm nass auf BOR supermatt. Messung nach DIN 53504.

0-Wert (Reißdehnung), Kraft in MPa, die gebraucht wird, um den Film zum Reißen zu bringen, angegeben ist weiterhin die machbare Dehnung in Prozent

Modul: Kraft in MPa, die benötigt wird, um eine 100%ige Dehnung herbeizuführen

Die erhaltenen Beschichtungen zeigen gute 0-Werte bei hervorragender Optik.

## Patentansprüche

1. Verfahren zur Herstellung von blockierten Polyurethan-Prepolymeren, bei dem
I)
A) lineare aliphatische Isocyanate mit
B) einem oder mehreren Polyol(en)
gegebenenfalls in Anwesenheit eines oder mehrerer Katalysatoren zu NCO-funktionellen Prepolymeren umgesetzt werden
und
II) diese Prepolymere anschließend einer kontinuierliche Destillation unterworfen werden, so dass Restmonomergehalt auf weniger als 10 Gew.-% der Gesamtmenge des lösemittelfreien Prepolymers abgesenkt wird
und
III) anschließend die freien NCO-Gruppen der nach Schritt II) erhaltenen Prepolymere gegebenenfalls in Anwesenheit eines oder mehrerer Katalysatoren mit einem Blockierungsmittel enthaltend mindestens ein CH-azides cyclisches Keton der allgemeinen Formel (1), 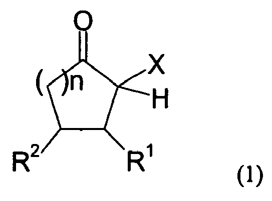 in welcher
X eine mesomer oder induktiv elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sein können und
n eine ganze Zahl von 0 bis 5 ist,
umgesetzt werden.

2. Verfahren nach Anspruch 1 **dadurch gekennzeichnet, dass** die elektronenziehende Gruppe X des CH-aziden cyclischen Ketons eine Ester-, Sulfoxid-, Sulfon-, Nitro-, Phosphonat-, Nitril-, Isonitril- oder Carbonylgruppe ist.

3. Verfahren nach Anspruch 1oder 2, **dadurch gekennzeichnet, dass** der Restmonomergehalt auf weniger als 1 Gew.-% der Gesamtmenge des lösemittelfreien Prepolymers abgesenkt wird

4. Blockierte Polyurethan-Prepolymere erhältlich nach einem der Verfahren gemäß einem der Ansprüche 1 bis 3.

5. Blockierte Polyurethan-Prepolymere auf Basis aliphatischer Isocyanate, die
i) Alkylenoxid-Ether Einheiten, und/oder
ii) Polyester Einheiten, und/oder
iii) Polyacrylat Einheiten, und/oder
iv) Polycarbonat Einheiten, sowie
v) Struktureinheiten der Formel (2) 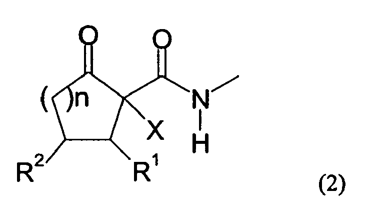 aufweisen, in welcher
X eine mesomer oder induktiv elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
n eine ganze Zahl von 0 bis 5 ist.

6. Blockierte Polyurethan-Prepolymere nach Anspruch 5 **dadurch gekennzeichnet, dass** die elektronenziehende Gruppe X eine Ester-, Sulfoxid-, Sulfon-, Nitro-, Phosphonat-, Nitril-, Isonitril- oder Carbonylgruppe ist.

7. Blockierte Polyurethan-Prepolymere nach einem der Ansprüche 4 bis 6, **dadurch gekennzeichnet, dass** diese auf HDI als aliphatisches Isocyanat basieren.

8. Verwendung von blockierten Polyurethan-Prepolymeren gemäß einem der Ansprüche 4 bis 7, bei der Herstellung von Beschichtungen, Klebstoffen, Elastomeren, Dichtungsmassen und Formteilen.

9. Reaktivsysteme enthaltend
a) Blockierte Polyurethan-Prepolymere nach einem der Ansprüche 4 bis 7
b) Polyamine und/oder
c) Polyhydroxyverbindungen und/oder
d) gegebenenfalls oxirangruppenhaltige Verbindungen

10. Beschichtungen erhältlich aus Reaktivsystemen gemäß Anspruch 9.

11. Substrate beschichtet mit Beschichtungen gemäß Anspruch 10.
